# EUROPÄISCHE PATENTSCHRIFT

(11) **EP 3 959 833 B1**
(45) Veröffentlichungstag und Bekanntmachung des Hinweises auf die Patenterteilung: **04.12.2024**
(21) Anmeldenummer: 20717757.7
(22) Anmeldetag: 02.04.2020
(51) Int. Cl.: H04B 10/114, H04B 10/116

(54) **VERFAHREN ZUR DATENÜBERTRAGUNG ZWISCHEN EINEM ERSTEN UND EINEM ZWEITEN MODUL UND ANLAGE MIT MOBILTEILEN ZUR DURCHFÜHRUNG DES VERFAHRENS**
METHOD FOR DATA TRANSMISSION BETWEEN A FIRST AND A SECOND MODULE AND SYSTEM COMPRISING MOBILE PARTS FOR CARRYING OUT THE METHOD
PROCÉDÉ DE TRANSMISSION DE DONNÉES ENTRE UN PREMIER ET UN SECOND MODULE ET SYSTÈME COMPORTANT DES PARTIES MOBILES PERMETTANT D'EXÉCUTER LE PROCÉDÉ

(30) Priorität: 25.04.2019 DE 102019002958
(43) Veröffentlichungstag der Anmeldung: 02.03.2022
(73) Patentinhaber: SEW-EURODRIVE GmbH & Co. KG, 76646 Bruchsal (DE)
(72) Erfinder: WANJEK, Andreas, 68753 Waghäusel (DE); STORCK, Steffen, 76646 Bruchsal (DE); HUA, Zhidong, 76646 Bruchsal (DE); SCHÄFER, Thomas, 76689 Karlsdorf-Neuthard (DE); SCHMIDT, Josef, 76676 Graben-Neudorf (DE)
(86) Internationale Anmeldenummer: PCT/EP2020/025158
(87) Internationale Veröffentlichungsnummer: WO 2020/216468

(56) Entgegenhaltungen:
- WO-A2-2009/010916
- US-A1- 2011 069 971

## Beschreibung

Die Erfindung betrifft ein Verfahren zur Datenübertragung zwischen einem ersten und einem zweiten Modul und einer Anlage mit Mobilteilen zur Durchführung des Verfahrens.

Es ist allgemein bekannt, dass zur Datenübertragung ein Empfänger das Signal eines Senders empfängt.

**Aus der** US 2011 / 0 069 971 A1 **ist als nächstliegender Stand der Technik ist ein Verfahren zur Datenübertragung mit sichtbarem Licht bekannt.**

**Aus der** DE 601 00 824 T2 **ist ein** Verfahren **zur Übertragungssignalnachführung in einem optischen Freiraumübertragungssystem bekannt.**

**Aus der** DE 10 2015 205 220 A1 **ist ein Tracking-System zum Tracken eines Trägers einer mobilen Kommunikationseinheit bekannt.**

**Aus der** US 2009 / 0 022 496 A1 **ist ein Verfahren zum Einrichten einer Kommunikationsverbindung mit sichtbarem Licht bekannt.**

**Aus der** US 2009 / 0 316 679 A1 **ist ein kabelloses Broadcast-Netzwerk bekannt.**

**Aus der** WO 2009/010916 A2 **ist als nächstliegender Stand der Technik das Antreiben einer Lichtquelle bekannt.**

Der Erfindung liegt daher die Aufgabe zugrunde, eine störungsarme und/oder fehlerarme Datenübertragung weiterzubilden.

Erfindungsgemäß wird die Aufgabe bei dem Verfahren nach den in Anspruch 1 und bei der Anlage nach den in Anspruch 8 angegebenen Merkmalen gelöst.

Wichtige Merkmale der Erfindung bei dem Verfahren zur Datenübertragung zwischen einem ersten und einem zweiten Modul sind, dass das erste Modul Sender für Licht und lichtsensitive Empfänger aufweist,
wobei das zweite Modul Sender für Licht und lichtsensitive Empfänger aufweist,
wobei
   - in einem ersten Verfahrensschritt die Zeitbasis des ersten Moduls mit der Zeitbasis des zweiten Moduls synchronisiert wird,
   - in einem zweiten Verfahrensschritt die Sender des ersten Moduls jeweils einzeln nacheinander und/oder in nummerierter Reihenfolge in einem jeweiligen Zeitbereich, insbesondere Zeitslot, einen Lichtsignalpuls aussenden,
   - wobei derjenige Empfänger des zweiten Moduls, insbesondere von einer Steuerelektronik des zweiten Moduls, bestimmt wird, an welchem das stärkste Empfangssignal, insbesondere während des Ausführens des zweiten Verfahrensschrittes, auftritt, wobei derjenige Zeitbereich, insbesondere Zeitslot, und/oder die Nummer desjenigen Zeitbereichs bestimmt wird, in welchem das stärkste Empfangssignal auftritt,
   - in einem dritten Verfahrensschritt der bestimmte Zeitbereich und/oder die bestimmte Nummer vom zweiten Modul an das erste Modul übermittelt wird
   - in einem vierten Verfahrensschritt der zum bestimmten Zeitbereich und/oder zur bestimmten Nummer zugehörige Sender des ersten Moduls, insbesondere von einer Steuerelektronik des ersten Moduls, bestimmt wird und zur nachfolgenden Datenübertragung vom ersten Modul zum zweiten Modul verwendet wird, wobei zumindest eines der Module eine Vorzugsrichtung aufweist, entweder durch unterschiedlich abstrahlende Lichtkegel der Sender, oder durch entsprechende Empfangskegel, also lichtempfindliche Bereiche, der Empfänger, insbesondere wobei zumindest der zweite, dritte und vierte Verfahrensschritt zeitlich wiederkehrend ausgeführt werden.

Von Vorteil ist dabei, dass eine möglichst störungsarme und rauscharme Datenübertragung erreichbar ist. Denn durch die Verwendung von Sendern, welche Licht aussenden, insbesondere in einer Vorzugsrichtung stärker als in einer anderen Richtung, und durch die Verwendung von Empfängern, welche ebenfalls eine Vorzugsrichtung in ihrem empfindlichen Bereich aufweisen, ist eine gerichtete Übertragung von Signalen ermöglicht. Licht aussendende Störsender sind somit unterdrückt, wenn sie nicht im verwendeten Übertragungsraumbereich angeordnet sind, welcher die Verbindungslinie zwischen Sender und Empfänger enthält. Außerdem wird zeitlich widerkehrend derjenige Sender des ersten Modules und derjenige Empfänger des zweiten Moduls ausgewählt, welcher eine Signalübertragung mit optimalem Signal-Rausch-Verhältnis ermöglicht. Dieses ausgewählte Paar bewirkt die größte Empfangsamplitude beim Empfänger, also das beste Signal-Rauschverhältnis. Dabei ist die Verbindungslinie zwischen Sender und Empfänger des Paares zumindest fast parallel zur Vorzugsrichtung des Senders und zur Vorzugsrichtung des Empfängers. Da bei Bewegung der Mobilteile die Ausrichtung der Module zueinander verändert wird und somit die Abweichung der Vorzugsrichtung von der Richtung der Verbindungslinie, wird zeitlich wiederkehrend das Paar immer wieder neu bestimmt.

Bei einer vorteilhaften Ausgestaltung senden
- in einem fünften Verfahrensschritt die Sender des zweiten Moduls jeweils einzeln nacheinander und/oder in nummerierter Reihenfolge in einem jeweiligen Zeitbereich, insbesondere Zeitslot, einen Lichtsignalpuls aus,
- wobei derjenige Empfänger des ersten Moduls bestimmt wird, an welchem das stärkste Empfangssignal, insbesondere während des Ausführens des fünften Verfahrensschrittes, auftritt, wobei derjenige Zeitbereich, insbesondere Zeitslot, und/oder die Nummer desjenigen Zeitbereichs bestimmt wird, in welchem das stärkste Empfangssignal auftritt,
- wonach in einem sechsten Verfahrensschritt der bestimmte Zeitbereich und/oder die bestimmte Nummer vom ersten Modul an das zweite Modul übermittelt wird
- wonach in einem siebten Verfahrensschritt der zum bestimmten Zeitbereich und/oder zur bestimmten Nummer zugehörige Sender des zweiten Moduls bestimmt wird und zur nachfolgenden Datenübertragung vom zweiten Modul zum ersten Modul verwendet wird,
insbesondere wobei zumindest der fünfte, sechste, und siebte Verfahrensschritt zeitlich wiederkehrend ausgeführt werden. Von Vorteil ist dabei, dass auch für den Rückkanal eine ebenso störungsarme Übertragung einrichtbar ist, da auch hierzu dasjenige Paar auswählbar ist, welches das Beste Signal-Rausch-Verhältnis ermöglicht.

Bei einer vorteilhaften Ausgestaltung weisen die Sender des ersten Moduls eine Vorzugsrichtung für das von ihnen ausgesandte Licht auf und sind unterschiedlich, insbesondere also nicht parallel, ausgerichtet angeordnet,
insbesondere wobei die von den Sendern des ersten Moduls jeweils abgestrahlten Lichtkegel nicht parallel ausgerichtet sind,
die Sender des zweiten Moduls eine Vorzugsrichtung für das von ihnen ausgesandte Licht aufweisen und unterschiedlich, insbesondere also nicht parallel, ausgerichtet angeordnet sind,
insbesondere wobei die von den Sendern des zweiten Moduls jeweils abgestrahlten Lichtkegel nicht parallel ausgerichtet sind. Von Vorteil ist dabei, dass störende Lichtquellen unterdrückbar sind. Denn der Kommunikationskanal beansprucht nur einen beschränkten Raumbereich.

Bei einer vorteilhaften Ausgestaltung wird nach dem vierten und/oder nach dem siebten Verfahrensschritt eine Nachricht übertragen. Von Vorteil ist dabei, dass erfindungsgemäß das bezüglich Signal-Rausch-Verhältnis beste Paar an Sender und Empfänger ausgewählt wird und somit die Nachrichten fehlerarm und störsicher übertragbar sind.

Bei einer vorteilhaften Ausgestaltung sind die Sender als LED und die Empfänger als lichtsensitives Bauelement, insbesondere Phototransistor oder Photodiode ausgeführt. Von Vorteil ist dabei, dass ein gerichtetes Senden von Licht ausführbar ist und ebenso ein Empfang mit Vorzugsrichtung.

Bei einer vorteilhaften Ausgestaltung befindet das zweite Modul sich innerhalb der Sendereichweite zumindest eines Senders des ersten Moduls und das erste Modul befindet sich innerhalb der Sendereichweite zumindest eines Senders des zweiten Moduls. Von Vorteil ist dabei, dass eine Nachrichtenübertragung ausführbar ist.

Bei einer vorteilhaften Ausgestaltung sind die im zweiten Verfahrensschritt von den Sendern ausgesendeten Lichtsignalpulse alle in der gleichen Weise moduliert, so dass jeder der Lichtsignalpulse dieselbe Nachricht beinhaltet. Von Vorteil ist dabei, dass der im zweiten Verfahrensschritt ausgeführte Trainingsablauf einerseits den das Paar mit dem besten Signal-Rausch-Verhältnis bestimmbar macht und andererseits während dieser Zeit trotzdem eine Nachricht übertragbar ist. Nachteilig ist dabei, dass jeder der Sender des ersten Moduls nacheinander denselben Lichtsignalpuls absendet, auf dem die selbe Nachricht aufmoduliert ist. Somit ist die Datenübertragungsrate während des Trainingsablauf kleiner als bei der sonstigen Datenübertragung. Je mehr Sender das erste Modul aufweist und je kürzer die Lichtsignalpulse jeweils sind, desto geringer ist also die Datenübertragungsrate.

Wenn aber das erste Modul beispielsweise nur vier Sender aufweist und der Lichtsignalpuls jeweils fast ein Viertel der Gesamtdauer des Trainingsablaufs, also des zweiten Verfahrensschritts, beanspruchen, ist immerhin eine Datenübertragungsrate erreichbar, die etwas kleiner als ein Viertel der sonstigen Datenübertragungsrate ist. Bei N Sendern ist also eine Datenübertragungsrate erreichbar, die etwas kleiner als der N-te Teil der sonstigen Datenübertragungsrate ist.

Wichtige Merkmale bei der Anlage mit Mobilteilen zur Durchführung eines vorgenannten Verfahrens sind, dass jedes der Mobilteile jeweils zumindest ein Modul aufweist, welches jeweils Sender insbesondere für Licht und insbesondere lichtsensitive Empfänger aufweist, insbesondere wobei die Sender und Empfänger des jeweiligen Moduls mit einer Steuerelektronik des jeweiligen Mobilteils verbunden sind.

Von Vorteil ist dabei, dass das Mobilteil Nachrichten zum anderen Mobilteil übertragen kann und somit ein gegenseitig beeinflusster Betrieb ausführbar ist. Einerseits ist somit eine Kollision vermeidbar und andererseits eine intralogistische Transportaufgabe gemeinsam ausführbar. Außerdem sind Informationen übermittelbar. Durch die gerichtete Übertragung ist aber auch eine Durchleitung von Nachrichten von einem ersten Mobilteil über ein zweites Mobilteil zu einem dritten Mobilteil ausführbar, auch wenn zwischen erstem und drittem Mobilteil keine Kommunikationsverbindung besteht. Auf diese Weise sind auch Nachrichten an zu weit entfernte Mobilteile ausführbar oder Nachrichten an Mobilteile, zu denen kein direkter, also geradliniger Sichtkontakt besteht. Es ist also eine störungsarme Kommunikation um ein Hindernis herum ermöglicht.

Bei einer vorteilhaften Ausgestaltung sind die Mobilteile auf einer Verfahrfläche der Anlage verfahrbar und die Module weisen jeweils denselben Abstand zur Verfahrfläche auf. Von Vorteil ist dabei, dass die Nachrichtenübermittelung in einer definierten Ebene oder Fläche ausführbar ist, die von der Verfahrfläche einen konstanten Abstand aufweist.

Bei einer vorteilhaften Ausgestaltung sind die Sender jedes Moduls entlang einer ebenen gekrümmten Kurve angeordnet, wobei die von den Sendern ausgesandten Lichtkegel unterschiedlich ausgerichtet sind. Von Vorteil ist dabei, dass trotz eng, also in einem jeweils geringen Raumwinkelbereich abstrahlenden Sendern ein weiter Raumwickelbereich abdeckbar ist.

Bei einer vorteilhaften Ausgestaltung ist zwischen einem ersten und einem dritten Mobilteil keine Signalübertragung ausführbar, insbesondere wegen eines zwischengeordneten Hindernisses und/oder wegen eine zu großen Entfernung,
wobei eine Datenübertragung zwischen dem ersten und einem zweiten Mobilteil ausgeführt wird und zwischen dem zweiten und dem dritten Mobilteil,
wobei das Verfahren nach einem der Ansprüche 1 bis 7 zwischen den Modulen des ersten und zweiten Mobilteils und das Verfahren nach einem der Ansprüche 1 bis 7 zwischen den Modulen des zweiten und dritten Mobilteils ausgeführt wird. Von Vorteil ist dabei, dass bei zu großer Entfernung oder bei zwischengeordnetem Hindernis für Licht eine Überbrückung mittels eines zwischengeordneten zweiten Mobilteils ermöglicht ist, das zwei Module aufweist, so dass die mit dem ersten der beiden Module von einem Modul des ersten Mobilteils empfangene Information mittels des zweiten der beiden Module des zweiten Mobilteils weiterübermittelbar ist an das dritte Mobilteil, insbesondere dessen Modul.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 sind ein erstes Modul 1 und ein vorzugsweise identisch aufgebautes zweites Modul 4 schematisch dargestellt.

In der Figur 2 sind die gesendeten und empfangenen Signalverläufe schematisch dargestellt.

Wie in den Figuren dargestellt, weist das erste Modul 1 vier Sender, insbesondere LED, auf, deren abstrahlbarer Lichtkegel in unterschiedliche Richtungen ausgerichtet ist.

Jedem Sender ist ein jeweiliger Empfänger, insbesondere Photodiode oder Phototransistor, zugeordnet, dessen empfindlicher Bereich ähnlich zum entsprechenden Lichtkegel geformt ist, also ebenfalls eine Vorzugsrichtung aufweist. Im einfachsten Fall ist die Vorzugsrichtung des Lichtkegels des jeweiligen Senders parallel zur Vorzugsrichtung des jeweiligen Empfängers.

Vorzugsweise sind die Sender entlang einer ebenen Kurve, insbesondere Kreisbahn, angeordnet und entlang dieser Kurve voneinander regelmäßig beabstandet.

Das zweite Modul 4 ist vorzugsweise identisch zum ersten Modul 1 ausgeführt.

Das erste Modul 1 ist auf einem ersten Mobilteil angeordnet und das zweite Modul 4 ist auf einem zweiten Mobilteil angeordnet, welches sich eigenständig, insbesondere automatisch geführt, relativ zum ersten Mobilteil in einer Anlage bewegt.

Zur Durchführung der Kommunikation wird zeitlich wiederkehrend der beste Übertragungskanal bestimmt, indem die Sender des ersten Moduls 1 Lichtpulse senden und derjenige Empfänger bestimmt wird, welcher von der höchsten Empfangsamplitude detektiert. Somit wird dann ein Übertragungskanal zwischen diesem Empfänger und dem für diesen Empfänger stärksten Sender eingerichtet. Diese Bestimmung und Einrichtung wird zeitlich wiederkehrend wiederholt.

Dies wird nun im Folgenden näher beschrieben:
In einem zeitlich deterministischen Raster werden Signale vom ersten Modul 1 gesendet und vom zweiten Modul 4 empfangen oder umgekehrt.

Hierzu wird an eine jeweilige Nachricht, gekennzeichnet durch den Zeitbereich t_TX_DATA, ein Trainingssignalverlauf angehängt.

Das Trainingssignal besteht aus vier nacheinander folgenden Zeitabschnitten, insbesondere Zeitslots, wobei in jeden der Zeitslots jeweils eine andere LED des ersten Moduls 1 einen Lichtsignalpuls sendet. Die Energie und Zeitdauer jedes der Lichtsignalpulse sind dabei gleichgroß.

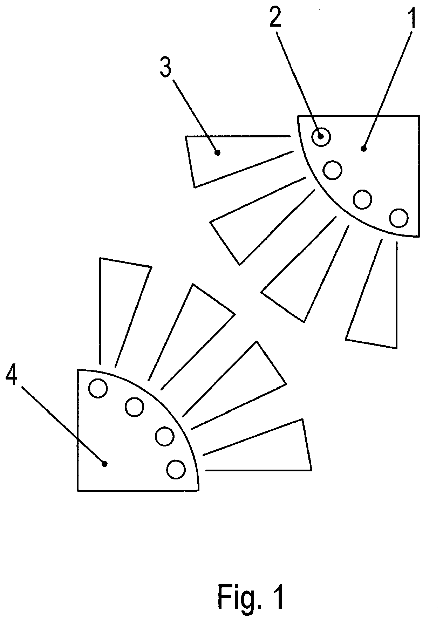

Gemäß Figur 1 sendet also
ein erster Sender des ersten Moduls 1 einen Lichtsignalpuls in einem ersten Zeitslot t_int1, ein zweiter Sender des ersten Moduls 1 einen Lichtsignalpuls in einem zweiten Zeitslot t_int2, ein dritter Sender des ersten Moduls 1 einen Lichtsignalpuls in einem dritten Zeitslot t_int3 und
ein vierter Sender des ersten Moduls 1 einen Lichtsignalpuls in einem vierten Zeitslot t_int4.

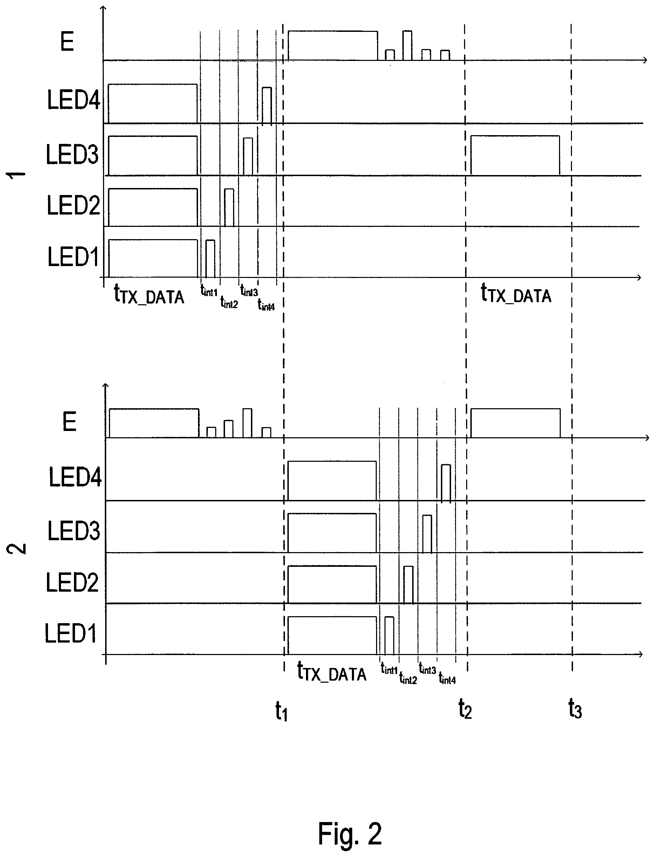

Das von einem der Empfänger des zweiten Moduls 4 empfangene Signal E ist in Figur 2 dargestellt und zeigt ein Maximum bei dem dritten Lichtsignalpuls. Somit wäre das Einrichten eines Kommunikationskanals zwischen dem dritten Sender und dem Empfänger möglich. Es werden aber auch die in Figur 2 nicht gezeigten Empfangssignale der anderen Empfänger des zweiten Moduls 4 ausgewertet. Daraufhin wird der Kommunikationskanal zwischen dem dritten Sender und demjenigen Empfänger eingerichtet, welcher das stärkste Signal empfangen hat. Gegebenenfalls wird statt des dritten Senders ein anderer Sender verwendet, wenn dieser ein stärkeres Signal bei einem der Empfänger bewirkt hat.

Mit anderen Worten ausgedrückt, wird dasjenige Sender-Empfänger-Paar bestimmt, welches das stärkste Empfangssignal erzeugen kann.

Wie in Figur 2 dargestellt, erfolgt also auf das erste Nachrichtenpaket, das vom ersten Modul 1 an das zweite Modul 4 gesendet wird, ein erstes Trainingssignal mit den vier Lichtsignalpulsen der Sender des ersten Moduls 1.

Dabei wird derjenige Empfänger bestimmt, dessen Empfangssignal die höchste Amplitude aufwies. Der zu dieser höchsten Amplitude zugehörige Sender wird bestimmt, in Figur 2 also der dritte Sender, und diese Information über die Identität des zugehörigen Senders, also des dritten Senders, im nächsten Nachrichtenpaket, welches vom zweiten zum ersten Modul 1 gesendet wird, an das erste Modul 1 übermittelt.

Auf diese Weise ist für die Übermittlung der Nachrichten vom ersten zum zweiten Modul der entsprechende Kommunikationskanal eingerichtet. Im Beispiel wird also für die Nachrichtenübermittlung vom ersten zum zweiten Modul der dritte Sender des ersten Modul 1 und der bestimmte Empfänger des zweiten Moduls 4 verwendet.

Danach wird das für den rückwärtigen Kanal zu verwendende Paar bestimmt:
Hierzu sendet das zweite Modul 4 ebenfalls ein Trainingssignal, welches wiederum aus von den Sendern einzeln zu sendenden Lichtsignalpulsen besteht.

Auf diese Weise ist nun wiederum die Bestimmung desjenigen Empfängers des ersten Moduls 1 ermöglicht, welches die stärkste Amplitude empfangen hat. Zugleich ist dabei die Bestimmung desjenigen Senders des zweiten Moduls 4 ausführbar, welcher dieses stärkste Signal gesendet hat.

Somit ist auch für den Rückkanal das beste Sender-Empfänger-Paar bestimmt.

Im Beispiel ist dies der zweite Sender des zweiten Moduls 4 und derjenige Empfänger des ersten Moduls 1, welcher das stärkste Empfangssignal detektiert.

Die so bestimmten Paare werden für die nachfolgende Übertragung der Nachrichten verwendet, bis wiederum mittels Trainingssignalen die aktuell besten Sener-Empfänger-Paare bestimmt werden.

Bei Übertragung der Nachrichten werden nur die bestimmten Sender und Empfänger verwendet. Die anderen Sender und Empfänger werden nicht verwendet. Somit sind Störeinwirkungen auf andere Mobilteile oder von anderen Mobilteilen verhinderbar. Denn zur Nachrichtenübertragung wird nur der vom Sender erzeugte Lichtkegel 3 verwendet, welcher auf den Empfänger des anderen Moduls (1, 4) gerichtet ist. Somit bestrahlt der Sender möglichst wenig andere Raumbereiche, in welchen beispielsweise weitere Module anderer Mobilteile bewegt werden.

Bei weiteren erfindungsgemäßen Ausführungsbeispielen sind die Lichtsignalpuls selbst auch moduliert, so dass von jedem der Lichtsignalpulse im Trainingssignalverlauf dieselbe Nachricht gesendet wird, insbesondere allerdings in verschiedene Vorzugsrichtungen. Die Empfänger empfangen somit diese Nachricht je nach Empfangsamplitude weniger oder stärker verrauscht. Nach Bestimmung des stärksten Empfangssignals ist aber auch die mit diesem Signal übertragene Nachricht fehlerarm detektierbar.

Bei weiteren erfindungsgemäßen Ausführungsbeispielen folgt auf jede übertragene Nachricht ein Trainingssignal, so dass eine optimale Aktualisierung bei der Bestimmung der aktuell besten Sender-Empfänger-Paare erfolgt.

### Bezugszeichenliste

1 erstes Modul
2 Lichttransceiver, insbesondere LED mit Photodiode oder Phototransistor
3 Lichtkegel
4 zweites Modul
E Empfang
t_TX_DATA Nachrichtenübertragung
t_int1 erster Zeitslot
t_int2 zweiter Zeitslot
t_int3 dritter Zeitslot
t_int4 vierter Zeitslot

## Patentansprüche

1. Verfahren zur Datenübertragung zwischen einem ersten und einem zweiten Modul (1, 4),
wobei das erste Modul (1) Sender für Licht und lichtsensitive Empfänger aufweist,
wobei das zweite Modul (4) Sender für Licht und lichtsensitive Empfänger aufweist,
**dadurch gekennzeichnet, dass**
- in einem ersten Verfahrensschritt die Zeitbasis des ersten Moduls (1) mit der Zeitbasis des zweiten Moduls (4) synchronisiert wird,
- in einem zweiten Verfahrensschritt die Sender des ersten Moduls (1) jeweils einzeln nacheinander und/oder in nummerierter Reihenfolge in einem jeweiligen Zeitbereich, insbesondere Zeitslot, einen Lichtsignalpuls aussenden,
- wobei derjenige Empfänger des zweiten Moduls (4), insbesondere von einer Steuerelektronik des zweiten Moduls (4), bestimmt wird, an welchem das stärkste Empfangssignal, insbesondere während des Ausführens des zweiten Verfahrensschrittes, auftritt, wobei derjenige Zeitbereich, insbesondere Zeitslot, und/oder die Nummer desjenigen Zeitbereichs bestimmt wird, in welchem das stärkste Empfangssignal auftritt,
- in einem dritten Verfahrensschritt der bestimmte Zeitbereich und/oder die bestimmte Nummer vom zweiten Modul (4) an das erste Modul (1) übermittelt wird
- in einem vierten Verfahrensschritt der zum bestimmten Zeitbereich und/oder zur bestimmten Nummer zugehörige Sender des ersten Moduls (1), insbesondere von einer Steuerelektronik des ersten Moduls (1), bestimmt wird und zur nachfolgenden Datenübertragung vom ersten Modul (1) zum zweiten Modul (4) verwendet wird,
**wobei zumindest eines der Module eine Vorzugsrichtung aufweist, entweder durch unterschiedlich abstrahlende Lichtkegel der Sender, oder durch entsprechende Empfangskegel, also** lichtempfindliche **Bereiche, der Empfänger,** insbesondere wobei zumindest der zweite, dritte und vierte Verfahrensschritt zeitlich wiederkehrend ausgeführt werden.

2. Verfahren nach Anspruch 1,
**dadurch gekennzeichnet, dass**
- in einem fünften Verfahrensschritt die Sender des zweiten Moduls (4) jeweils einzeln nacheinander und/oder in nummerierter Reihenfolge in einem jeweiligen Zeitbereich, insbesondere Zeitslot, einen Lichtsignalpuls aussenden,
- wobei derjenige Empfänger des ersten Moduls (1) bestimmt wird, an welchem das stärkste Empfangssignal, insbesondere während des Ausführens des fünften Verfahrensschrittes, auftritt, wobei derjenige Zeitbereich, insbesondere Zeitslot, und/oder die Nummer desjenigen Zeitbereichs bestimmt wird, in welchem das stärkste Empfangssignal auftritt,
- in einem sechsten Verfahrensschritt der bestimmte Zeitbereich und/oder die bestimmte Nummer vom ersten Modul (1) an das zweite Modul (4) übermittelt wird
- in einem siebten Verfahrensschritt der zum bestimmten Zeitbereich und/oder zur bestimmten Nummer zugehörige Sender des zweiten Moduls (4) bestimmt wird und zur nachfolgenden Datenübertragung vom zweiten Modul (4) zum ersten Modul (1) verwendet wird,
insbesondere wobei zumindest der fünfte, sechste, und siebte Verfahrensschritt zeitlich wiederkehrend ausgeführt werden.

3. Verfahren nach Anspruch 1 oder 2,
**dadurch gekennzeichnet, dass**
die Sender des ersten Moduls (1) eine Vorzugsrichtung für das von ihnen ausgesandte Licht aufweisen und unterschiedlich, insbesondere also nicht parallel, ausgerichtet angeordnet sind,
insbesondere wobei die von den Sendern des ersten Moduls (1) jeweils abgestrahlten Lichtkegel nicht parallel ausgerichtet sind,
die Sender des zweiten Moduls (4) eine Vorzugsrichtung für das von ihnen ausgesandte Licht aufweisen und unterschiedlich, insbesondere also nicht parallel, ausgerichtet angeordnet sind,
insbesondere wobei die von den Sendern des zweiten Moduls (4) jeweils abgestrahlten Lichtkegel nicht parallel ausgerichtet sind.

4. Verfahren nach einem der vorangegangenen Ansprüche,
**dadurch gekennzeichnet, dass**
nach dem vierten und/oder nach dem siebten Verfahrensschritt eine Nachricht übertragen wird.

5. Verfahren nach einem der vorangegangenen Ansprüche,
**dadurch gekennzeichnet, dass**
die Sender als LED und die Empfänger als lichtsensitives Bauelement, insbesondere Phototransistor oder Photodiode ausgeführt sind.

6. Verfahren nach einem der vorangegangenen Ansprüche,
**dadurch gekennzeichnet, dass**
das zweite Modul (4) sich innerhalb der Sendereichweite zumindest eines Senders des ersten Moduls (1) befindet und dass
das erste Modul (1) sich innerhalb der Sendereichweite zumindest eines Senders des zweiten Moduls (4) befindet.

7. Verfahren nach einem der vorangegangenen Ansprüche,
**dadurch gekennzeichnet, dass**
die im zweiten Verfahrensschritt von den Sendern ausgesendeten Lichtsignalpulse alle in der gleichen Weise moduliert sind, so dass jeder der Lichtsignalpulse dieselbe Nachricht beinhaltet.

8. Anlage mit Mobilteilen eingerichtet zur Durchführung eines Verfahrens nach einem der vorangegangenen Ansprüche,
**dadurch gekennzeichnet, dass**
jedes der Mobilteile jeweils zumindest ein Modul (1) aufweist, welches jeweils Sender für Licht und lichtsensitive Empfänger aufweist,
wobei die Sender und Empfänger des jeweiligen Moduls (1) mit einer Steuerelektronik des jeweiligen Mobilteils verbunden sind.

9. **Anlage nach Anspruch 8,**
**dadurch gekennzeichnet, dass**
die Mobilteile auf einer Verfahrfläche der Anlage verfahrbar sind und die Module jeweils denselben Abstand zur Verfahrfläche aufweisen.

10. **Anlage nach Anspruch 8 oder 9,**
**dadurch gekennzeichnet, dass**
die Sender jedes Moduls (1) entlang einer ebenen gekrümmten Kurve angeordnet sind, wobei die von den Sendern ausgesandten Lichtkegel unterschiedlich ausgerichtet sind.

11. **Anlage nach Anspruch 8, 9 oder 10,**
**dadurch gekennzeichnet, dass**
zwischen einem ersten und einem dritten Mobilteil keine Signalübertragung ausführbar ist, insbesondere wegen eines zwischengeordneten Hindernisses und/oder wegen eine zu großen Entfernung,
wobei eine Datenübertragung zwischen dem ersten und einem zweiten Mobilteil ausgeführt wird und zwischen dem zweiten und dem dritten Mobilteil,
wobei das Verfahren nach einem der Ansprüche 1 bis 7 zwischen den Modulen des ersten und zweiten Mobilteils und das Verfahren nach einem der Ansprüche 1 bis 7 zwischen den Modulen des zweiten und dritten Mobilteils ausgeführt wird.

## Claims

1. Method for transmitting data between a first and a second module (1, 4),
wherein the first module (1) comprises transmitters for light and also light-sensitive receivers, wherein the second module (4) comprises transmitters for light and also light-sensitive receivers,
**characterised in that**
- in a first method step, the time base of the first module (1) is synchronised with the time base of the second module (4),
- in a second method step, the transmitters of the first module (1) each emit a light signal pulse individually one after the other and/or in numerical order within a particular time range, in particular a time slot,
- wherein the particular receiver of the second module (4) at which the strongest receive signal occurs, in particular during the execution of the second method step, is determined, in particular by control electronics of the second module (4), wherein the particular time range, in particular the time slot, and/or the number of the particular time range in which the strongest receive signal occurs is/are determined,
- in a third method step, the determined time range and/or the determined number is/are communicated from the second module (4) to the first module (1),
- in a fourth method step, the particular transmitter of the first module (1) that is associated with the determined time range and/or the determined number is determined, in particular by control electronics of the first module (1), and is used for the subsequent transmission of data from the first module (1) to the second module (4),
wherein at least one of the modules has a preferential direction, either as a result of differently radiating light cones of the transmitters or as a result of corresponding receive cones, i.e. light-sensitive regions, of the receivers, in particular wherein at least the second, third and fourth method steps are carried out recurrently over time.

2. Method according to claim 1,
**characterised in that**
- in a fifth method step, the transmitters of the second module (4) each emit a light signal pulse individually one after the other and/or in numerical order within a particular time range, in particular a time slot,
- wherein the particular receiver of the first module (1) at which the strongest receive signal occurs, in particular during the execution of the fifth method step, is determined, wherein the particular time range, in particular the time slot, and/or the number of the particular time range in which the strongest receive signal occurs is/are determined,
- in a sixth method step, the determined time range and/or the determined number is communicated from the first module (1) to the second module (4),
- in a seventh method step, the particular transmitter of the second module (4) that is associated with the determined time range and/or the determined number is determined and is used for the subsequent transmission of data from the second module (4) to the first module (1),
in particular wherein at least the fifth, sixth and seventh method steps are carried out recurrently over time.

3. Method according to claim 1 or claim 2,
**characterised in that**
the transmitters of the first module (1) have a preferential direction for the light emitted by them and are arranged in a differently oriented manner, i.e. in particular not in parallel,
in particular wherein the light cones radiated by each transmitter of the first module (1) are not oriented in parallel,
the transmitters of the second module (4) have a preferential direction for the light emitted by them and are arranged in a differently oriented manner, i.e. in particular not in parallel,
in particular wherein the light cones emitted by each transmitter of the second module (4) are not oriented in parallel.

4. Method according to any of the preceding claims,
**characterised in that**
a message is transmitted after the fourth and/or after the seventh method step.

5. Method according to any of the preceding claims,
**characterised in that**
the transmitters are configured as LEDs, and the receivers are configured as light-sensitive elements, in particular phototransistors or photodiodes.

6. Method according to any of the preceding claims,
**characterised in that**
the second module (4) is located within the transmission range of at least one transmitter of the first module (1), and **in that**
the first module (1) is located within the transmission range of at least one transmitter of the second module (4).

7. Method according to any of the preceding claims,
**characterised in that**
the light signal pulses emitted by the transmitters in the second method step are all modulated in the same way such that each of the light signal pulses contains the same message.

8. Facility comprising mobile components configured for carrying out a method according to any of the preceding claims,
**characterised in that**
each of the mobile components has at least one module (1), each of which comprises transmitters for light and also light-sensitive receivers,
wherein the transmitters and receivers of each module (1) are connected to control electronics of the particular mobile component.

9. Facility according to claim 8,
**characterised in that**
the mobile components can travel on a travel surface of the facility, and the modules are each at the same distance from the travel surface.

10. Facility according to claim 8 or claim 9,
**characterised in that**
the transmitters of each module (1) are arranged along a smooth arcuate curve, wherein the light cones emitted by the transmitters are oriented differently.

11. Facility according to claim 8, claim 9 or claim 10,
**characterised in that**
signals cannot be transmitted between a first and a third mobile component, in particular because of an obstacle arranged therebetween and/or because they are at too great a distance from one another,
wherein data are transmitted between the first and a second mobile component and between the second and the third mobile component,
wherein the method according to any of claims 1 to 7 is carried out between the modules of the first and the second mobile component, and the method according to any of claims 1 to 7 is carried out between the second and the third mobile component.

## Revendications

1. Procédé de transmission de données entre un premier et un second module (1, 4), dans lequel le premier module (1) comprend des émetteurs de lumière et des récepteurs photosensibles,
dans lequel le second module (4) comprend des émetteurs de lumière et des récepteurs photosensibles,
**caractérisé en ce que**
- dans une première étape de procédé, la base de temps du premier module (1) est synchronisée avec la base de temps du second module (4),
- dans une deuxième étape du processus, les émetteurs du premier module (1) émettent une impulsion de signal lumineux respectivement de manière individuelle l'un après l'autre et/ou dans un ordre numéroté dans une plage temporelle respective, en particulier dans un créneau horaire,
- en particulier une électronique de commande du second module (4) détermine le récepteur du second module (4) au niveau duquel apparait le signal de réception le plus fort, en particulier pendant la mise en oeuvre de la deuxième étape de procédé, dans lequel la plage temporelle, en particulier le créneau horaire, et/ou le numéro de la plage temporelle au sein de laquelle apparait le signal de réception le plus fort est/sont déterminé(s),
- dans une troisième étape de procédé, la plage temporelle déterminée et/ou le numéro déterminé est transmis du second module (4) au premier module (1)
- dans une quatrième étape de procédé, l'émetteur, associé à la plage temporelle déterminée et/ou au numéro déterminé, du premier module (1) est déterminé, en particulier par une électronique de commande du premier module (1), et est utilisé pour la transmission ultérieure de données du premier module (1) au second module (4),
dans lequel au moins un des modules présente une direction préférentielle, soit passant par un cône de lumière des émetteurs qui rayonne différemment, soit passant par un cône de réception, c'est-à-dire des régions photosensibles, correspondant des récepteurs, en particulier dans lequel au moins les deuxième, troisième et quatrième étapes de procédé sont mises en oeuvre de manière récurrente dans le temps.

2. Procédé selon la revendication 1,
**caractérisé en ce que**
- dans une cinquième étape de procédé, les émetteurs du second module (4) émettent une impulsion de signal lumineux respectivement de manière individuelle l'un après l'autre et/ou dans un ordre numéroté dans une plage temporelle respective, en particulier dans un créneau horaire,
- dans lequel le récepteur du premier module (1) au niveau duquel apparait le signal de réception le plus fort, en particulier pendant la mise en oeuvre de la cinquième étape de procédé, est déterminé, dans lequel la plage temporelle, en particulier le créneau horaire, et/ou le numéro de la plage temporelle au sein de laquelle apparait le signal de réception le plus fort est/sont déterminé(s),
- dans une sixième étape de procédé, la plage temporelle déterminée et/ou le numéro déterminé est transmis du premier module (1) au second module (4),
- dans une septième étape de procédé, l'émetteur, associé à la plage temporelle déterminée et/ou au numéro déterminé, du second module (4) est déterminé et est utilisé pour la transmission ultérieure de données du second module (4) au premier module (1),
en particulier dans lequel au moins les cinquième, sixième et septième étapes de procédé sont mises en oeuvre de manière récurrente dans le temps.

3. Procédé selon la revendication 1 ou 2,
**caractérisé en ce que**
les émetteurs du premier module (1) présentent une direction préférentielle pour la lumière qu'ils émettent et sont orientés différemment, en particulier de manière non parallèle,
en particulier dans lequel les cônes de lumière respectivement rayonnés par les émetteurs du premier module (1) ne sont pas orientés parallèlement,
les émetteurs du second module (4) présentent une direction préférentielle pour la lumière qu'ils émettent et sont orientés différemment, en particulier de manière non parallèle,
en particulier dans lequel les cônes de lumière respectivement rayonnés par les émetteurs du second module (4) ne sont pas orientés parallèlement.

4. Procédé selon l'une quelconque des revendications précédentes,
**caractérisé en ce que**
un message est transmis après la quatrième et/ou après la septième étape de procédé.

5. Procédé selon l'une quelconque des revendications précédentes,
**caractérisé en ce que**
les émetteurs sont mis en oeuvre sous forme de LED et les récepteurs sont mis en oeuvre sous forme d'éléments photosensibles, en particulier de phototransistors ou de photodiodes.

6. Procédé selon l'une quelconque des revendications précédentes,
**caractérisé en ce que**
le second module (4) se trouve à l'intérieur de la portée d'émission d'au moins un émetteur du premier module (1) et **en ce que**
le premier module (1) se trouve à l'intérieur de la portée d'émission d'au moins un émetteur du second module (4).

7. Procédé selon l'une quelconque des revendications précédentes,
**caractérisé en ce que**
les impulsions de signal lumineux émises par les émetteurs dans la deuxième étape de procédé sont toutes modulées de la même manière, de sorte que chacune des impulsions de signal lumineux contient le même message.

8. Installation équipée de parties mobiles conçues pour mettre en oeuvre un procédé selon l'une quelconque des revendications précédentes,
**caractérisée en ce que** chacune des parties mobiles présente respectivement au moins un module (1) qui présente respectivement des émetteurs de lumière et des récepteurs photosensibles,
dans lequel les émetteurs et les récepteurs du module (1) respectif sont reliés à une électronique de commande de la partie mobile respective.

9. Installation selon la revendication 8,
**caractérisée en ce que**
les parties mobiles peuvent être déplacées sur une surface de déplacement de l'installation et les modules sont à la même distance de la surface de déplacement.

10. Installation selon la revendication 8 ou 9,
**caractérisée en ce que**
les émetteurs de chaque module (1) sont agencés le long d'une courbe plane,
dans lequel les cônes de lumière émis par les émetteurs sont orientés différemment.

11. Installation selon la revendication 8, 9 ou 10,
**caractérisée en ce que**
aucune transmission de signal ne peut être mise en oeuvre entre une première et une troisième partie mobile, en particulier en raison d'un obstacle interposé et/ou d'une trop grande distance,
dans lequel une transmission de données est mise en oeuvre entre la première et une deuxième partie mobile et entre la deuxième et la troisième partie mobile,
dans lequel le procédé selon l'une quelconque des revendications 1 à 7 est mis en oeuvre entre les modules des première et deuxième parties mobiles et le procédé selon l'une quelconque des revendications 1 à 7 est mis en oeuvre entre les modules des deuxième et troisième parties mobiles.
